# EUROPEAN PATENT SPECIFICATION

(11) **EP 1 342 399 B1**
(45) Date of publication and mention of the grant of the patent: **28.04.2004**
(21) Application number: 02425120.9
(22) Date of filing: 04.03.2002
(51) Int. Cl.: A01B 59/041

(54) **A lateral stabilizer for lower arms of three-point hitches**
Unterlenkerstabilisator für dreipunktaufhängung
Stabilisateur pour bras inférieur de suspension trois-points

(43) Date of publication of application: 10.09.2003
(73) Proprietor: CBM S.p.A., 41100 Modena (IT)
(72) Inventor: Cornia, Enrico Maria, 41100 Modena (IT)
(74) Representative: Provvisionato, Paolo

(56) References cited:
- DE-U- 8 810 247
- GB-A- 2 172 082
- US-A- 5 462 303

## Description

The present invention relates to a lateral stabiliser for lower arms of three-point hitches.

Stabilisers of the type indicated above are known and comprise a first and a second stabilising member, which are coupled to be movable relative to one another, locking means, which are articulated to the first stabilising member and which are selectively pivotable to lock or unlock the stabilising members, and restraining means for limiting the pivoting of the locking means when the stabiliser is in the unlocked configuration, the restraining means being movable to define possible variable limits for the pivoting of the locking means.

Normally, although not exclusively, the stabilising means comprise a tubular casing and a cylindrical body, respectively, which are coupled telescopically. Nibs or projections are formed on the cylindrical body in known manner and are selectively engaged and locked by respective recesses or projections formed on the end of the locking means remote from their point of articulation to the tubular casing. The locking means therefore preferably, although not necessarily, adopt the appearance of a single member of the type having a pawl, ratchet, fork, jaw or the like and are connected to a tie rod secured to the structure of the agricultural tractor, while the tubular casing and the cylindrical body are secured, as it is known, to the structure of the agricultural tractor and to an attachment on the lower arm of the three-point hitch, respectively.

When the lower arm is raised, the tie rod is slackened, enabling the locking member to approach the cylindrical body and to lock it, by engaging the nibs. When, on the other hand, the lower arm is lowered, the tie rod moves the locking member away from the nibs and keeps it at a distance from the cylindrical body; that enables the stabiliser to operate in floating manner, pulling or pushing the lower arm laterally towards a predetermined neutral position owing to the return action exerted by resilient means, which are generally one or more helical springs which are arranged inside the stabiliser.

A known type of simple lateral stabiliser is described in document DE-A-2727131 in which a jaw articulated to a casing is provided with two parallel teeth which can engage between a plate, secured to the cylindrical body coupled telescopically to the casing, and an end flange of the cylindrical body. The jaw can be moved away from the locking position and turned over with its back on the casing in order not to interfere with the sliding of the casing and the cylindrical body relative to one another. It is, of course, not possible thus to obtain satisfactory automatic operation with the system which uses the tie rod indicated above because, once the turned-over position has been passed beyond, the jaw can be returned to its locking position only by manual intervention, which is generally undesirable and inadvisable for safety reasons.

Other types of lateral stabiliser of the type mentioned above are described in documents US-A-5361850 and US-A-5462303. Those stabilisers both present solutions for avoiding the turning-over of the locking jaw. In the first case, the jaw is provided with closed shaped slots in which the nibs of the second tubular body are inserted while, in the second case, the lifting of the jaw is limited by a ring or peg secured to a pin which projects from the tubular casing and extends through the back of the jaw, passing into a slot provided for the purpose.

In floating operation, the lateral stabiliser interacts with the lower arm in order to hold it in a predetermined position, which is defined as the central or neutral position. The further the lower arm moves away from the neutral position, the more the stabiliser exerts a pull or a thrust thereon in order to return it to the neutral position. Depending on the type of implement connected to the three-point hitch and depending on its lateral bulk, the neutral position of the lower arms has to be adjusted and this is rendered possible by the threaded connection of the cylindrical body to a threaded rod which terminates in a member for connection to the lower arm. By rotating the cylindrical body, the threaded rod is unscrewed or tightened and the total length of the stabiliser is thus lengthened or shortened, modifying the neutral position thereof.

In order to be able to adjust the length of the stabiliser by rotating the cylindrical body, it is necessary to raise the locking jaw and thus to free the nibs. If the jaw can be turned over, as in the case of the simple stabiliser of document DE-A-2727131, the operator can adjust the length of the stabiliser with ease. In the case of the device described in patent US-A-5361850, however, it is possible to turn the jaw over only after having removed the ring which is normally secured to the pin in order to limit the lifting of the jaw, with the consequent difficulties which that operation involves.

The main disadvantages of the mentioned stabilisers of the prior art are therefore those of limited functionality and difficult and complicated intervention for the operator, especially during the operations of adjusting the length and the neutral position of the stabiliser.

The object of the present invention is to overcome the disadvantages of the prior art and, in particular, to provide a lateral stabiliser which can be controlled automatically in its working state, for example by means of a tie rod or the like, as generally known in this sector, and which, at the same time, has a locking/unlocking system which makes it possible to pass from a working state to an adjustment or setting state, or vice versa, by minimum, easy and rapid operations, at the same time ensuring greater safety for the operator both because, in the working state, the stabiliser can operate automatically without requiring manual intervention, and because, in the adjustment or setting state, the operator can intervene quite safely with ample space.

A further object of the invention is to provide a lateral stabiliser which is simple and economical to manufacture and which is reliable over time despite the heavy conditions of use normally encountered in the agricultural sector.

In order to achieve the objects indicated above the invention relates to a lateral stabiliser according to claim 1. In a preferred embodiment, the restraining means perform the double function of keeping the locking means raised during the setting of the stabiliser and, at the same time, of preventing those locking means from turning over during normal operation of the stabiliser.

In a particularly advantageous embodiment, the restraining means comprise a bow secured to the flanks or cheeks of the locking member in such a manner as to extend around the tubular casing from the end remote from the lifting region of the locking member. A check appendage is provided on the tubular casing and interferes with the bow in order to prevent excessive lifting or lowering thereof in the two states of working and setting of the lateral stabiliser, respectively.

According to a further feature of the invention, the restraining means resiliently restrain the pivoting of the locking means during passage from a locked state to an unlocked state, in order to prevent it from turning over. In one variant, the restraining means comprise a bow, preferably a resilient bow, which is connected movably, but not detachably, to the tubular casing or to the cylindrical body, and a pawl on the back of the locking member. During passage from a locked working state to a floating working state, the bow slides on the back of the locking member, pressing resiliently thereon, and cooperates with the pawl in order to define the position of maximum opening in a floating working state. The bow can be selectively raised until it is released from engagement with the pawl, thus enabling the locking member to be brought into an adjustment position. With that arrangement, it is possible to reach an adjustment position which ensures maximum space for intervention by the operator while still preventing the locking jaw from turning over.

Other features and advantages will emerge from the following detailed description, with reference to the appended drawings which are given purely by way of non-limiting example and in which:
- Figure 1 is a partially sectioned side view of a lateral stabiliser according to the present invention in a locked working state,
- Figure 2 is a longitudinal section taken on the line II-II of Figure 1,
- Figure 3 is a view analogous to that of Figure 1, in which the stabiliser is in a floating working state,
- Figure 4 is a view analogous to that of Figures 1 and 3, in which the stabiliser is in an adjustment state,
- Figure 5 is a partially sectioned side view of a variant of the lateral stabiliser according to the present invention, in a locked working state,
- Figure 6 is a top view in the direction of arrow VI of Figure 5,
- Figure 7 is a view analogous to that of Figure 5, in which the stabiliser is in a floating working state,
- Figure 8 is a view analogous to that of Figure 5, in which the stabiliser is in an adjustment state,
- Figure 9 is a view analogous to that of Figure 5 in which the stabiliser is in a locked working state which is reached from the adjustment state of Figure 8,
- Figure 10 is a partially sectioned side view of a further variant of the lateral stabiliser according to the present invention, in a locked working state,
- Figure 11 is a top view in the direction of arrow XI of Figure 10,
- Figure 12 is a view analogous to that of Figure 10, in which the stabiliser is in an adjustment state,
- Figure 13 is a cross-section taken on the line XIII-XIII of Figure 10,
- Figure 14 is a partially sectioned side view of a further variant of the lateral stabiliser according to the present invention, in a locked working state, and
- Figure 15 is a cross-section taken on the line XV-XV of Figure 14, on an enlarged scale.

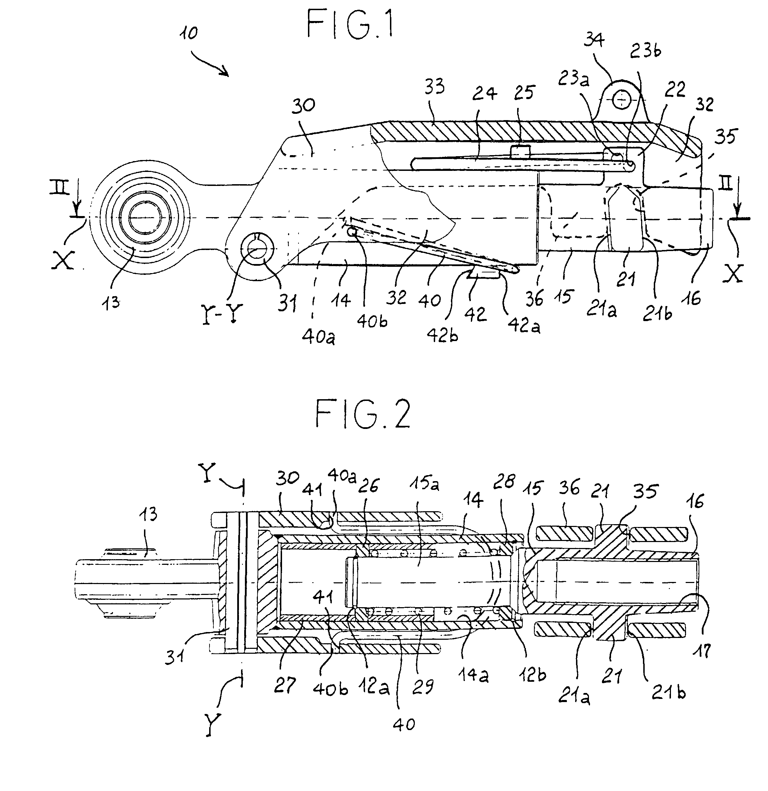

Referring now to Figures 1 and 2, a lateral stabiliser 10 comprises a tubular casing or body 14 which has, at one of its ends, a spherical eye 13 by which, in use, it is connected to the structure of an agricultural tractor. A cylindrical body 15 extending along a longitudinal axis X-X is partially inserted in an axially sliding manner in the casing 14 and projects therefrom at the end remote from the eye 13. The cylindrical body 15 is also mounted to rotate freely about the longitudinal axis X-X of the stabiliser 10. At its end 16, the cylindrical body 15 has a threaded hole 17 in which, as is known, a rod (not shown) is engaged by screwing, the rod terminating at the end in a member for connecting the stabiliser 10 to the lower arm of a three-point hitch.

Extending radially from the cylindrical body 15 is a protuberance 22 having holes 23a, 23b in which engage the ends of an anti-rotation catch 24, preferably a metal wire or a shaped spring, which, in the position illustrated in the drawings, prevents the casing 14 and the cylindrical body 15 from rotating relative to one another, in accordance with known methods, only the basic features of which are described here. The anti-rotation catch 24 is selectively coupled to an appendage 25, for example a cylindrical appendage, which projects radially from the casing 14 in such a manner as to block the rotation of the cylindrical body 15 about the axis X-X, but without preventing it from sliding longitudinally in a telescopic manner relative to the tubular casing 14.

As can be seen more clearly in Figure 2, the cylindrical body 15 has a portion 15a of smaller diameter which is accommodated in the internal cavity 14a of the casing 14 and on which a first stop ring 26 held by a safety ring 12a secured near the end of the portion 15a is slidably mounted. The first stop ring 26 abuts a tubular spacer 27 which is inserted in the cavity 14a of the casing 14. A spring 29 is mounted around the portion 15a of the cylindrical body 15 and its ends press, respectively, against the first stop ring 26 and a second stop ring 28, which is likewise slidably mounted on the portion 15a and which is held by an associated safety ring 12b.

The spring 29, which is preferably preloaded, helps to maintain the casing 14 and the cylindrical body 15 in a neutral or centred relative position, by exerting a resilient thrust on the first stop ring 26 or, alternatively, on the second stop ring 28. The resilient thrust is proportional to the movement of the cylindrical body 15 relative to the casing 14 in the one or the other direction, along the longitudinal axis X-X.

A locking member 30 for blocking the movement of the stabiliser 10 is mounted pivotably on the tubular casing 14. In more detail, the locking member 30 is articulated to the tubular casing 14 by means of a pin 31 in such a manner as to be able to pivot about a transverse axis Y-Y arranged at a distance from the axis X-X. The locking member 30 comprises two cheeks 32 which extend around the casing 14 and the cylindrical body 15 when the stabiliser 10 is in the locked working state represented in Figure 1. The cheeks 32 are preferably, but not necessarily, connected by a bridge 33 from which extends a connector 34 for connecting the locking member 30 to a known control member (not shown). In the preferred, but non-limiting, embodiment illustrated in Figures 1 to 4, the connector 34 comprises an eyelet which projects from the bridge 33 and to which a cable, a tie rod, a chain or the like, of the type which is resiliently yielding or connected to a spring, may be coupled as a control member.

The cheeks 32 of the locking member 30 comprise shaped recesses 35 which define a pair of forks 36, each of which, when the stabiliser 10 is in the locked working state illustrated in Figure 1, engages on a corresponding nib 21 which projects radially from the cylindrical body 15 in a position such that it does not hinder the sliding of the casing 14 and the cylindrical body 15 relative to one another. Each nib 21 preferably has two parallel walls 21a and 21b inclined relative to a plane which is at right-angles to the axis X-X in order to promote the engagement thereof with the shaped recesses 35 as a result of a pivoting of the locking member 30 about the axis Y-Y.

In the embodiment illustrated in Figures 1 to 4, the inclination of the walls 21a, 21b is approximately 5°, but it will be appreciated that the particular value of their inclination, and more generally the form of the nibs 21, will be selected on the basis of the specific dimensions of the stabiliser 10, the dimensional ratios between its various components, and in particular the distance between the transverse axis Y-Y and the longitudinal axis X-X, the form of the forks 36 and also the methods of manufacturing and using the stabiliser 10. Purely by way of example, the nibs 21 may be cylindrical or they may themselves be in the form of a fork, in which case corresponding locking projections are formed on the locking member 30.

Mounted on the cheeks 32 of the locking member 30 is a bow 40 which is preferably, although this does not constitute a limitation, formed by a substantially U-shaped metal wire or rod, the ends 40a, 40b of which are bent parallel with the transverse axis Y-Y and are inserted in transverse holes 41 which are non-coaxial and offset relative to one another and which are formed in the cheeks 32. The bow 40 extends around the casing 14 from the end remote from the locking member 30 and interferes selectively, as will be described more clearly hereinafter, with a check member 42 projecting from the casing 14.

In the preferred embodiment illustrated, the check member 42 comprises a first limiting wall 42a, on the right in Figure 1, which is substantially at right-angles to the horizontal plane marked X-X, and an opposite holding wall 42b which is inclined relative to the plane X-X in such a manner that the shaped bow 40 can wedge itself between the wall 42b and the outer curved surface of the casing 14 for reasons which will become clearer hereinafter.

The stabiliser 10 has some characteristic working positions. As mentioned above, Figures 1 and 2 illustrate the stabiliser 10 in a locked position in which the coupling between the locking member 30 and the stop means or nibs 21 prevent the floating movement along the axis X-X between the casing 14 and the cylindrical body 15. In that locked working state of the stabiliser 10, the bow 40 is moved away from the check member 42 in the longitudinal direction but nevertheless remains near the peripheral curved surface of the casing 14 owing to the couple generated by the offsetting of its ends 40a, 40b.

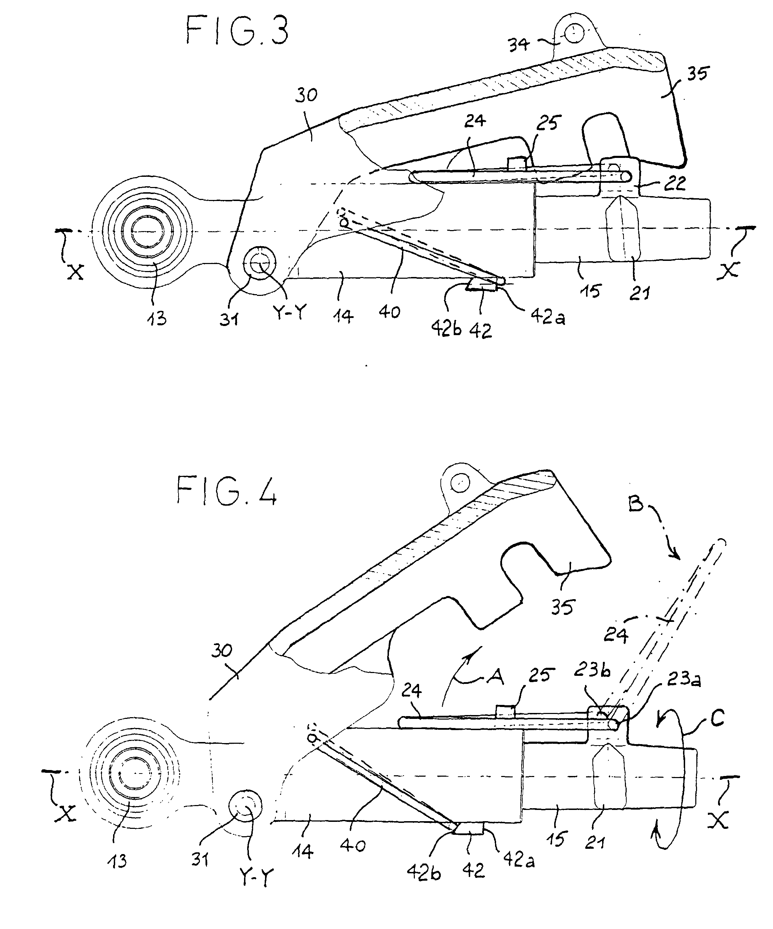

Figure 3 illustrates a floating working position of the stabiliser 10 in which the locking member 30 is moved away and disengaged from the stop means 21, so that the stabiliser 10 is permitted to operate in floating manner. As is known, the stabiliser 10 automatically reaches that floating working position when the lower arms of the three-point hitch, and therefore the stabiliser 10, are lowered and the control member coupled to the connector 34 holds and lifts the locking member 30. In that state, the bow 40 is driven towards the check member 42 until it meets the wall 42a thereof and thus prevents further rotation of the locking member 30 about the axis Y-Y. Otherwise, the above-mentioned rotation would continue until it caused the locking member 30 to turn over, consequently preventing the automatic return thereof into the locked working position of Figure 1 as a result of the lower arms of the three-point hitch being lifted.

Figure 4 shows the locking member 30 in a state of adjustment or setting of the length, and therefore of the neutral position, of the stabiliser 10. In that state, the user must be able to gain access with some ease to the tubular body 15 and must be able to rotate it until the desired length of the stabiliser 10 is obtained, by the tightening or unscrewing of the rod coupled to the threaded hole 17. In order to achieve that configuration, the bow 40 is moved away manually from the peripheral curved surface of the casing 14 and carried beyond the check member 42, so that the very weight of the locking member 30 wedges the bow 40 between the inclined wall 42b of the check member 42 and the peripheral curved surface of the casing 14. Once that state has been reached, the user can safely adjust the stabiliser 10, having ample space and being able to use both hands for operation.

In particular, with reference to the specific embodiment of the stabiliser illustrated in the drawings, although this is not to be regarded as a limitation of the present invention, the adjustment of the stabiliser 10 may be effected by lifting the anti-rotation catch 24 in the direction of arrow A from its lying-down position until it is brought into a position B, illustrated by way of example with a dot-dash line in Figure 4, in which the anti-rotation catch 24 is arranged symmetrically relative to the offset holes 23a, 23b, and therefore in a stable position. In that position, in addition to the fact that the casing 14 and the cylindrical body 15 are allowed to rotate relative to one another, the anti-rotation catch 24 can act as a handle or crank for imparting to the cylindrical body 15 the rotation about the axis X-X in one of the two directions indicated by the arrow C. When the adjustment has been completed, the anti-rotation catch 24 is returned to the lying-down position in order to extend around the appendage 25 and again block the rotation of the casing 14 and the tubular body 15 relative to one another. At this point it is possible to lower the locking member 30 by returning the bow 40 into the working position of the stabiliser 10 described above and illustrated in Figures 1 to 3.

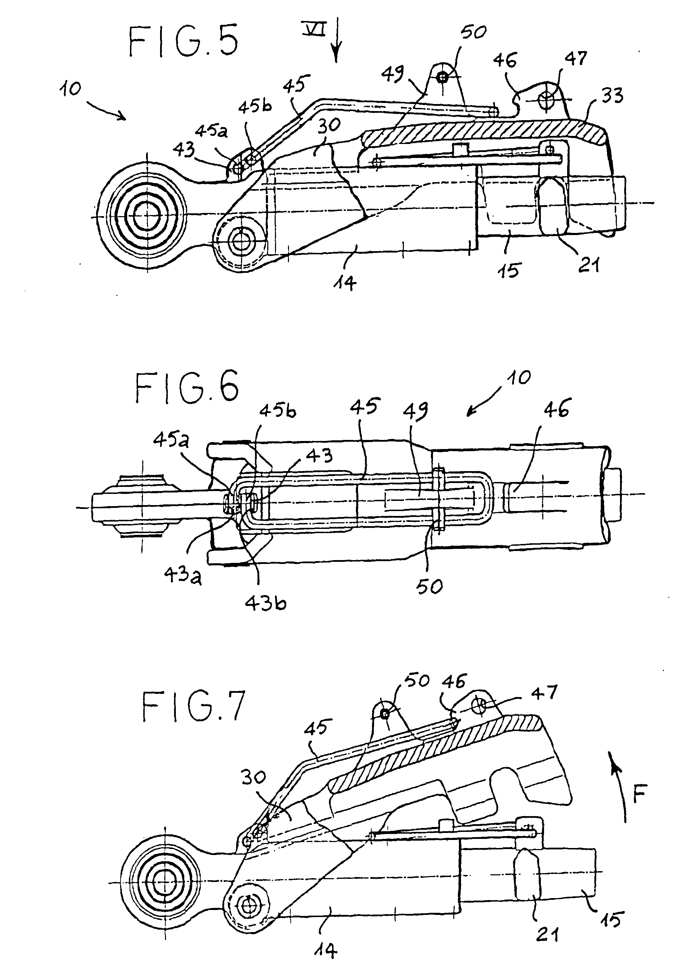

Referring now to Figures 5 and 6, in a variant of the invention the lateral stabiliser 10 comprises a bow 45 or other similar means connected operatively to the tubular casing 14, and a pawl 46 formed on the outside of the locking member 30 on the back of the bridge 33. A hole 47, for example positioned in the pawl 46, permits the coupling of a control member which may be a cable, a chain, a resilient means or any other lifting device. The bow 45, which, purely by way of example, may be produced from a bent metal wire or rod, preferably has, although this is not to constitute a limitation, two terminal appendages 45a and 45b which are offset relative to one another and which are inserted in corresponding holes 43a and 43b in the tubular casing 14 or in an appendage 43 thereof. The bow 45 can exert a resilient thrust on the back of the bridge 33 owing to its characteristic form, and in particular owing to the offset positioning of the terminal appendages 45a and 45b.

Extending from the back of the bridge 33 is an appendage 49 which projects to the outside of the locking member 30, passing through the loop formed by the bow 45, and to which is secured a transverse abutment peg 50 or other similar means, such as, for example, a ring which is secured inseparably, that is to say in a non-detachable manner, to the appendage 49.

When the locking member 30 is moved away from the cylindrical body 15, during passage from the locked working state of Figure 5 to the floating working state of Figure 7, the bow 45 slides on the bridge 33 until it engages the pawl 46, thus preventing further opening of the locking member 30 in the direction indicated by the arrow F, in order to prevent it from turning over.

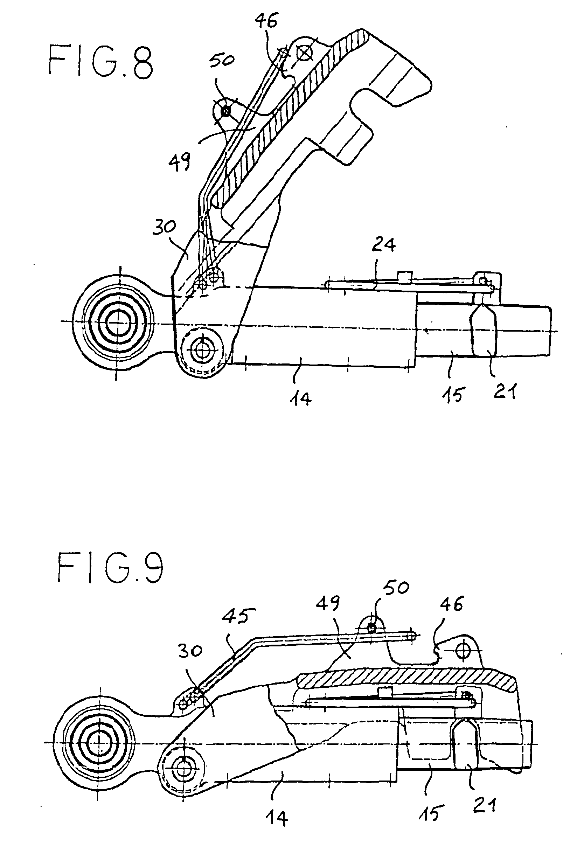

The bow 45 may be selectively lifted in order to prevent it from sliding on the locking member 30. In that state, the bow 45 does not meet the pawl 46 during the opening of the locking member in the direction indicated by the arrow F, so that it is possible to lift the locking member 30 until it reaches the adjustment position illustrated in Figure 8. Preferably, although this is not to constitute a limitation, the bow 45 is also capable of adopting a stable position, substantially close to that illustrated in Figure 8, in order to keep the locking member 30 raised in the adjustment position, thanks to the transverse abutment peg or the abutment ring 50 which rests on the bow 45, without it being necessary to keep the locking member 30 raised manually.

From the adjustment position of Figure 8, it is possible to force the lowering of the locking member 30 by hand, so that the transverse abutment peg or the abutment ring 50, as illustrated in Figure 9, returns the bow 45 to the working configuration of the stabiliser.

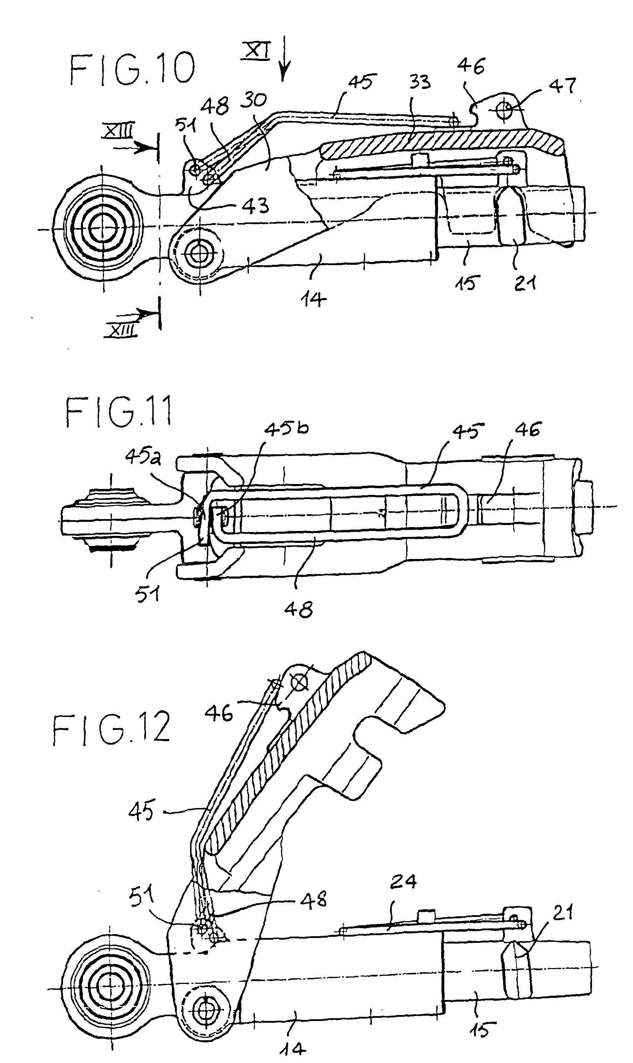

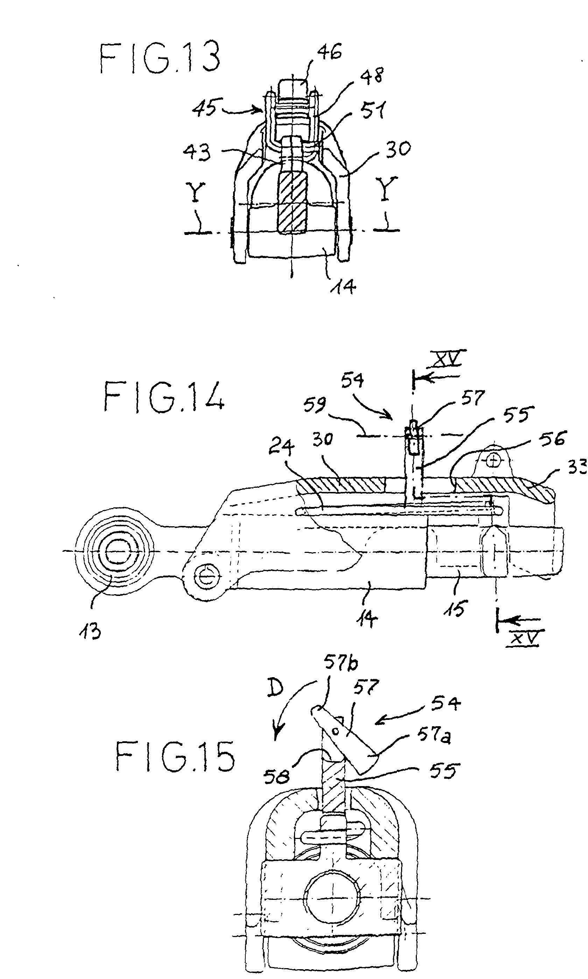

Figures 10 to 13 illustrate a variant of the stabiliser described above in which one of the two terminal appendages 45a and 45b of the bow 45 extends in an extension 51 which prevents the bow 45 from reaching and passing beyond the position of maximum opening when the stabiliser is in the adjustment state illustrated in Figure 12. In particular, the transverse extension 51 interferes with the limb 48 of the bow 45 when the latter reaches a predetermined raised position. In a further variant (not shown) it is also possible to dispense with the pawl 46 since the locking member 30 is in any case prevented from turning over by the extension 51. In this variant, the bow 45 may optionally exert a resilient thrust on the back of the locking member 30. The obstacle to the lifting of the bow 45 may of course also be constituted by means functionally similar to the extension 51, such as, for example, a transverse pin or peg which, when the bow 45 is in the position of maximum opening, meets at least one of the limbs thereof, for example the limb 48.

Figures 14 and 15 illustrate a further embodiment of the present invention in which the lateral stabiliser is provided with stop means 54 which normally prevent the locking member 30 from moving away from the cylindrical body 15 beyond the floating working position. The stop means 54 comprise a finger or protuberance 55 positioned on the tubular casing 14 and projecting through a slot 56 in the bridge 33, and a trigger 57 or other non-detachable movable means of a similar type, which in the particular case illustrated in the drawings is mounted pivotably in a groove 58 in the protuberance 55. The trigger 57 pivots about the horizontal axis 59 and has a heavier end 57a and a lighter end 57b. In the locked working state, illustrated in Figures 14 and 15, the heavier end 57a projects laterally from the protuberance 55, being supported by the base of the groove 58. During passage from the locked working state to the floating working state, further lifting of the locking member 30 is prevented by the interference of the bridge or back 33 with the trigger 57.

The trigger 57 may be selectively rotated about the axis 59 in such a manner that its light end 57b, which is preferably shorter than the heavy end 57a, moves in the direction of arrow D until the trigger is aligned with the protuberance 55. At this point it is possible to lift the locking member 30 beyond the floating working position by causing the trigger 57 to enter the slot 56.

The stabiliser of the present invention, as described above in some of its variants, makes it possible to satisfy in an optimum, simple and economical manner the requirement for efficient functioning of the stabiliser and its passage from the locked working state to the floating working state and vice versa, and the requirement for convenient and safe adjustment thereof. Owing to the simple movement of the bow 40 or 45, or of the trigger 57, it is possible to obtain, if necessary, a wide opening of the locking member 30. The operator can thus intervene to adjust the stabiliser 10 in all safety thanks to the space which has been made available, with the advantage of not having to detach any element from the stabilising device.

The particular features of the stabiliser, and in particular of the restraining means enable the locking member 30 to be brought into the position in which it is raised and at a distance from the tubular body 15 in the adjustment or setting state. As stated above, the bow 40 or 45, and also the trigger 57, could be substituted by functionally analogous means, such as lever, stirrup, coupling or cam means or also means of a resilient type, which can interfere, respectively, with the casing 14 or with check means connected thereto, or with the locking member 30 or with the catch means connected thereto, and thus exert on the locking member 30 a thrust which opposes the pivoting thereof about the axis Y-Y in the direction of the tubular body 15.

## Claims

1. A lateral stabiliser for lower arms of three-point hitches, comprising:
- a first and a second stabilising member (14, 15) which are coupled to be movable relative to one another,
- locking means (30) which are articulated to the first stabilising member (14) and are selectively pivotable in order to lock or unlock the stabilising members (14, 15),
- restraining means (40, 42, 45, 46, 54) for limiting the pivoting of the locking means when the stabiliser is in the unlocked configuration, the restraining means being movable to define possible variable limits for the pivoting of the locking means
**characterized in that** the restraining means are connected movably and inseparably to the first or second stabilising member or to the locking means so that no element is detached from the stabiliser when different limits for the pivoting of the locking means including the limit for the pivoting of the locking means in the unlocked configuration of the stabiliser are defined.

2. A lateral stabiliser according to claim 1, **characterised in that** the restraining means resiliently restrain the pivoting of the locking means (30).

3. A lateral stabiliser according to claim 2, **characterised in that** the restraining means comprise a bow (40, 45) which resiliently opposes the pivoting of the locking means (30) away from the second stabilising member (15).

4. A lateral stabiliser according to claim 3, **characterised in that** it comprises interference means (51) capable of interfering with the body of the bow (45) in order to prevent the locking means (30) from reaching a turned-over state when the stabiliser is in an unlocked or adjustment state.

5. A lateral stabiliser according to claim 3, **characterised in that** a pawl (46) is formed on the locking means (30) and cooperates with the bow (40, 45) in order selectively to limit the pivoting of the locking means (30) in the unlocked state.

6. A lateral stabiliser according to claim 1 or claim 2, **characterised in that** the restraining means (40, 42, 45, 50) are selectively activatable when the lateral stabiliser (10) is in an adjustment or setting state in order to hold the locking means (30) in a position away from the second stabilising member (15), at a distance not shorter than a predetermined first distance.

7. A lateral stabiliser according to claim 6, **characterised in that** the restraining means comprise a bow (40, 45) which can assume a first stable position in the adjustment or setting state, there being positioned on the locking means (30) a check member (49, 50) comprising abutment means (50) which surmount the bow (40, 45) and cooperate therewith in order to hold the locking means (30) in the adjustment position.

8. A lateral stabiliser according to claim 6, **characterised in that** the locking means (30) comprise two cheeks (32) to which are connected the ends of a bow (40) which extends around the first stabilising member (14) from the end remote from the operative region for the approach and moving-away of the locking means (30) articulated to the first stabilising member (14), a check appendage (42) provided on the first stabilising means (14) cooperating in interference with the bow (40) in order to exert on the locking means (30) a thrust which opposes the approach thereof to the second stabilising member (15) beyond the predetermined first distance.

9. A lateral stabiliser according to claim 8, **characterised in that** the check appendage (42) comprises an inclined wall (42b), the bow (40) becoming wedged between the inclined wall (42b) and a portion of the first stabilising member (14) when the lateral stabiliser is in the adjustment state.

10. A lateral stabiliser according to claim 8, **characterised in that** the bow (40) is substantially U-shaped with ends that are bent in a transverse direction and connected in an offset manner to the cheeks (32) of the locking means (30), and that are non-coaxial in a transverse direction.

11. A lateral stabiliser according to any one of claims 6 to 10, **characterised in that** the predetermined first distance of minimum spacing of the locking means (30) from the second stabilising member (15) when the stabiliser (10) is in the adjustment state is larger than the pivoting limit of the locking means (30) in the unlocked configuration.

12. A lateral stabiliser according to any one of the preceding claims 6 to 11, comprising control and adjusting means (24) for adjusting the length of the stabiliser (10) by imparting a rotation to the second stabilising member (15), the control and adjusting means (24) being selectively movable from a return position, adjacent to the second stabilising member (15), to an extended position in which they extend therefrom, **characterised in that** the predetermined first distance of minimum spacing of the locking means (30) from the second stabilising member (15) when the stabiliser (10) is in the adjustment state is selected in such a manner that the locking means (30) do not interfere with the control and adjusting means (24) during a complete rotation imparted by the latter to the second stabilising member (15).

13. A lateral stabiliser according to any one of the preceding claims, **characterised in that** the first stabilising member comprises a tubular casing (14) inside which is mounted in a telescopically slidable manner a substantially cylindrical body (15) which is provided with nib means (21) which, when the stabiliser (10) is in the locked working state, cooperate with the locking means (30) in order to block the sliding of the tubular casing (14) and the substantially cylindrical body (15) relative to one another.

## Patentansprüche

1. Seitenstabilisator für Unterlenker von Dreipunktaufhängungen mit Folgendem:
- einem ersten und einem zweiten Stabilisatorglied (14, 15), die so gekoppelt sind, dass sie sich zueinander bewegen können,
- Verriegelungsmitteln (30), die an dem ersten Stabilisatorglied (14) angelenkt und gezielt schwenkbar sind, um die Stabilisatorglieder (14, 15) zu ver- oder entriegeln,
- Einschränkungsmitteln (40, 42, 45, 46, 54) zum Begrenzen des Schwenkens der Verriegelungsmittel, wenn der Stabilisator in der entriegelten Konfiguration ist, wobei die Einschränkungsmittel so bewegt werden können, dass sie mögliche variable Grenzen für das Schwenken der Verriegelungsmittel definieren,
**dadurch gekennzeichnet, dass** die Einschränkungsmittel beweglich und untrennbar mit dem ersten oder dem zweiten Stabilisatorglied oder mit den Verriegelungsmitteln verbunden sind, so dass kein Element vom Stabilisator gelöst wird, wenn verschiedene Grenzen für das Schwenken der Verriegelungsmittel, einschließlich der Grenze für das Schwenken der Verriegelungsmittel in der entriegelten Konfiguration des Stabilisators, definiert werden.

2. Seitenstabilisator nach Anspruch 1, **dadurch gekennzeichnet, dass** die Einschränkungsmittel das Schwenken der Verriegelungsmittel (30) federnd einschränken.

3. Seitenstabilisator nach Anspruch 2, **dadurch gekennzeichnet, dass** die Einschränkungsmittel einen Bügel (40, 45) umfassen, der dem Schwenken der Verriegelungsmittel (30) vom zweiten Stabilisatorglied (15) weg federnd entgegensteht.

4. Seitenstabilisator nach Anspruch 3, **dadurch gekennzeichnet, dass** er ein Eingreifmittel (51) umfasst, das in den Körper des Bügels (45) eingreifen kann, um zu verhindern, dass die Verriegelungsmittel (30) einen umgedrehten Zustand erreichen, wenn der Stabilisator in einem entriegelten oder Einstellungszustand ist.

5. Seitenstabilisator nach Anspruch 3, **dadurch gekennzeichnet, dass** eine Klinke (46) an den Verriegelungsmitteln (30) ausgebildet ist und mit dem Bügel (40, 45) zusammenwirkt, um das Schwenken der Verriegelungsmittel (30) im entriegelten Zustand gezielt zu begrenzen.

6. Seitenstabilisator nach Anspruch 1 oder 2, **dadurch gekennzeichnet, dass** die Einschränkungsmittel (40, 42, 45, 50) gezielt aktivierbar sind, wenn der Seitenstabilisator (10) in einem Einstellungszustand ist, um die Verriegelungsmittel (30) so weit vom zweiten Stabilisatorglied (15) entfernt zu halten, wie dies mindestens einem vorbestimmten ersten Abstand entspricht.

7. Seitenstabilisator nach Anspruch 6, **dadurch gekennzeichnet, dass** die Einschränkungsmittel einen Bügel (40, 45) umfassen, der eine erste stabile Position im Einstellungszustand einnehmen kann, wobei an den Verriegelungsmitteln (30) ein Sperrglied (49, 50) positioniert ist, das Anschlagmittel (50) umfasst, die den Bügel (40, 45) überragen und mit diesem zusammenwirken, um die Verriegelungsmittel (30) in der Einstellungsposition zu halten.

8. Seitenstabilisator nach Anspruch 6, **dadurch gekennzeichnet, dass** die Verriegelungsmittel (30) zwei Wangen (32) umfassen, mit denen die Enden eines Bügels (40) verbunden sind, der sich von dem Ende, das von dem Betriebsbereich für das Annähern und Entfernen der Verriegelungsmittel (30), die am ersten Stabilisatorglied (14) angelenkt sind, entfernt liegt, um das erste Stabilisatorglied (14) erstreckt, wobei ein am ersten Stabilisatormittel (14) vorgesehener Sperransatz (42) in den Bügel (40) eingreift, um einen Schub auf die Verriegelungsmittel (30) auszuüben, der ihrer Annäherung an das zweite Stabilisatorglied (15) über den vorbestimmten ersten Abstand hinaus entgegensteht.

9. Seitenstabilisator nach Anspruch 8, **dadurch gekennzeichnet, dass** der Sperransatz (42) eine geneigte Wand (42b) umfasst, wobei der Bügel (40) zwischen der geneigten Wand (42b) und einem Teil des ersten Stabilisatorglieds (14) eingeklemmt wird, wenn der Seitenstabilisator im Einstellungszustand ist.

10. Seitenstabilisator nach Anspruch 8, **dadurch gekennzeichnet, dass** der Bügel (40) im Wesentlichen U-förmig ist, wobei seine Enden in einer Querrichtung gebogen und versetzt mit den Wangen (32) der Verriegelungsmittel (30) verbunden sind sowie in einer Querrichtung nicht koaxial sind.

11. Seitenstabilisator nach einem der Ansprüche 6 bis 10, **dadurch gekennzeichnet, dass** der vorbestimmte erste Mindestabstand der Verriegelungsmittel (30) vom zweiten Stabilisatorglied (15), wenn sich der Stabilisator (10) im Einstellungszustand befindet, größer ist als die Schwenkgrenze der Verriegelungsmittel (30) in der entriegelten Konfiguration.

12. Seitenstabilisator nach einem der Ansprüche 6 bis 11, mit Steuer- und Einstellmitteln (24) zum Einstellen der Länge des Stabilisators (10), indem das zweite Stabilisatorglied (15) gedreht wird, wobei die Steuer- und Einstellmittel (24) gezielt von einer Rückstellposition in der Nähe des zweiten Stabilisatorglieds (15) in eine ausgefahrene Position, in der sie sich davon erstrecken, bewegt werden können, **dadurch gekennzeichnet, dass** der vorbestimmte erste Mindestabstand der Verriegelungsmittel (30) von dem zweiten Stabilisatorglied (15), wenn der Stabilisator (10) im Einstellungszustand ist, so ausgewählt wird, dass die Verriegelungsmittel (30) bei einer vollständigen Drehung des zweiten Stabilisatorglieds (15) durch die Steuer- und Einstellmittel nicht in die Steuer- und Einstellmittel (24) eingreifen.

13. Seitenstabilisator nach einem der vorhergehenden Ansprüche, **dadurch gekennzeichnet, dass** das erste Stabilisatorglied ein rohrförmiges Gehäuse (14) umfasst, in dem ein im Wesentlichen zylindrischer Körper (15) teleskopartig verschiebbar angebracht ist, der mit Nasenmitteln (21) versehen ist, die mit den Verriegelungsmitteln (30) zusammenwirken, wenn der Stabilisator (10) im verriegelten Betriebszustand ist, um das Gleiten des rohrförmigen Gehäuses (14) bezüglich des im Wesentlichen zylindrischen Körpers (15) zu blockieren.

## Revendications

1. Stabilisateur latéral pour bras inférieurs de suspension à trois points, comprenant :
un premier et un deuxième éléments de stabilisation (14, 15) qui sont couplés pour être mobiles l'un par rapport à l'autre,
des moyens de verrouillage (30) qui sont articulés par rapport au premier élément de stabilisation (14) et peuvent être pivotés de manière sélective pour verrouiller ou déverrouiller les éléments de stabilisation (14, 15),
des moyens de retenue (40, 42, 45, 46, 54) pour limiter le pivotement des moyens de verrouillage lorsque le stabilisateur se trouve dans la configuration déverrouillée, les moyens de retenue étant mobiles pour définir des limites variables possibles pour le pivotement des moyens de verrouillage,
**caractérisé en ce que** les moyens de retenue sont raccordés de manière mobile et de manière inséparable au premier ou au deuxième élément de stabilisation ou aux moyens de verrouillage de sorte qu'aucun élément n'est détaché du stabilisateur lorsque sont définies des limites différentes pour le pivotement des moyens de verrouillage, y compris la limite pour le pivotement des moyens de verrouillage dans la configuration non verrouillée du stabilisateur.

2. Stabilisateur latéral selon la revendication 1, **caractérisé en ce que** les moyens de retenue retiennent de manière élastique le pivotement des moyens de verrouillage (30).

3. Stabilisateur latéral selon la revendication 2, **caractérisé en ce que** les moyens de retenue comprennent un arceau (40, 45) qui s'oppose de manière élastique au pivotement des moyens de verrouillage (30) à distance du deuxième élément de stabilisation (15).

4. Stabilisateur latéral selon la revendication 3, **caractérisé en ce qu'**il comprend des moyens d'interférence (51) capable d'interférer avec le corps de l'arceau (45) pour empêcher les moyens de verrouillage (30) d'atteindre un état retourné lorsque le stabilisateur se trouve à l'état déverrouillé ou d'ajustement.

5. Stabilisateur latéral selon la revendication 3, **caractérisé en ce qu'**un cliquet (46) est formé sur les moyens de verrouillage (30) et coopère avec l'arceau (40, 45) pour limiter de manière sélective le pivotement des moyens de verrouillage (30) à l'état déverrouillé.

6. Stabilisateur latéral selon la revendication 1 ou la revendication 2, **caractérisé en ce que** les moyens de retenue (40, 42, 45, 50) peuvent être actionnés de manière sélective lorsque le stabilisateur latéral (10) se trouve à l'état d'ajustement ou d'installation pour maintenir les moyens de verrouillage (30) dans une position à distance du deuxième élément de stabilisation (15), à une distance qui n'est pas inférieure à une première distance prédéterminée.

7. Stabilisateur latéral selon la revendication 6, **caractérisé en ce que** les moyens de retenue comprennent un arceau (40, 45) qui peut supposer une première position stable à l'état d'ajustement ou d'installation, qu'est positionné sur les moyens de verrouillage (30) un élément de contrôle (49, 50) comprenant des moyens de butée (50) qui surmontent l'arceau (40, 45) et coopèrent avec celui-ci pour maintenir les moyens de verrouillage (30) dans la position d'ajustement.

8. Stabilisateur latéral selon la revendication 6, **caractérisé en ce que** les moyens de verrouillage (30) comprennent deux joues (32) auxquelles sont raccordées les extrémités d'un arceau (40) qui s'étend autour du premier élément de stabilisation (14) depuis l'extrémité distante de la région opératoire pour l'approche et l'éloignement des moyens de verrouillage (30) articulés par rapport au premier élément de stabilisation (14), un accessoire de contrôle (42) prévu sur les premiers moyens de stabilisation (14) coopérant en interférence avec l'arceau (40) pour exercer sur les moyens de verrouillage (30) une poussée qui s'oppose à l'approche de ceux-ci vers le deuxième élément de stabilisation (15) au-delà de la première distance prédéterminée.

9. Stabilisateur selon la revendication 8,
**caractérisé en ce que** l'accessoire de contrôle (42) comprend une paroi inclinée (42b), l'arceau (40) devenant en coin entre la paroi inclinée (42b) et une partie du premier élément de stabilisation (14) lorsque le stabilisateur latéral se trouve à l'état d'ajustement.

10. Stabilisateur latéral selon la revendication 8, **caractérisé en ce que** l'arceau (40) est sensiblement en forme de U avec des extrémités qui sont courbées dans une direction transversale et raccordées d'une manière décalée aux joues (32) des moyens de verrouillage (30), et qui sont non coaxiales dans une direction transversale.

11. Stabilisateur latéral selon l'une quelconque des revendications 6 à 10, **caractérisé en ce que** la première distance prédéterminée d'espacement minimum des moyens de verrouillage (30) depuis le deuxième élément de stabilisation (15) lorsque le stabilisateur (10) se trouve à l'état d'ajustement est supérieure à la limite de pivotement des moyens de verrouillage (30) dans la configuration déverrouillée.

12. Stabilisateur latéral selon l'une quelconque des revendications précédentes 6 à 11, comprenant des moyens de commande et d'ajustement (24) pour ajuster la longueur du stabilisateur (10) en communiquant une rotation au deuxième élément de stabilisation (15), les moyens de commande et d'ajustement (24) étant mobiles de manière sélective depuis une position de retour, adjacente au deuxième élément de stabilisation (15), vers une position étendue dans laquelle ils s'étendent depuis celle-ci, **caractérisé en ce que** la première distance prédéterminée d'espacement minimum des moyens de verrouillage (30) depuis le deuxième élément de stabilisation (15) lorsque le stabilisateur (10) se trouve à l'état d'ajustement est sélectionné de telle manière que les moyens de verrouillage (30) n'interfèrent pas avec les moyens de commande et d'ajustement (24) pendant une rotation complète communiquée par ces derniers au deuxième élément de stabilisation (15).

13. Stabilisateur latéral selon l'une quelconque des revendications précédentes, **caractérisé en ce que** le premier élément de stabilisation comprend un boîtier tubulaire (14) à l'intérieur duquel est monté, de manière coulissante et télescopique, un corps sensiblement cylindrique (15) qui est pourvu de moyens formant ergot (21) qui, lorsque le stabilisateur (10) se trouve à l'état de travail verrouillé, coopèrent avec les moyens de verrouillage (30) pour bloquer le coulissement du boîtier tubulaire (14) et du corps sensiblement cylindrique (15) l'un par rapport à l'autre.
